# EUROPEAN PATENT APPLICATION

(11) **EP 1 541 937 A1**
(43) Date of publication of application: **15.06.2005**
(21) Application number: 03730620.6
(22) Date of filing: 23.05.2003
(51) Int. Cl.: F25B 1/00

(54) **SUPERCRITICAL REFRIGERATION CYCLE**

(30) Priority: 29.05.2002 JP 2002155669
(71) Applicant: Zexel Valeo Climate Control Corporation, Ohsato-gun, Saitama 360-0193 (JP)
(72) Inventor: MUTA, Shunji Zexel Valeo Climate Control Corp., Ohsato-gun, Saitama 360-0193 (JP); FURUYA, Shunichi Zexel Valeo Climate Control Corp., Ohsato-gun, Saitama 360-0193 (JP); TAKAZAWA, Osamu Zexel Valeo Climate Control Corp., Ohsato-gun, Saitama 360-0193 (JP)
(74) Representative: HOFFMANN - EITLE
(86) International application number: PCT/JP2003/006503
(87) International publication number: WO 2003/100329

(57) **Abstract**

A supercritical refrigeration cycle using CO₂ for a refrigerant and having a pressure exceeding the critical point of the refrigerant on a high-pressure side, wherein:
the supercritical refrigeration cycle allows the refrigerant and a part of a lubricating oil to circulate, and
the lubricating oil used does not contain an epoxy-based oxygen scavenger or an additive which is thermally decomposed on the high-pressure side and its decomposed components make a chemical reaction to produce a compound having low solubility to the refrigerant so as to prevent a deposit from being produced at a portion where the refrigerant is decompressed.

## Description

### TECHNICAL FIELD

The present invention relates to a supercritical refrigeration cycle using CO₂ as a refrigerant and having a pressure of exceeding the critical point of the refrigerant on the high-pressure side.

### BACKGROUND ART

As the refrigerant for the refrigeration cycle, a fluorocarbon refrigerant including hydrochlorofluorocarbon has been used extensively but it is now being replaced with CO₂ considering the global environment in these years.

A refrigeration cycle using CO₂ as the refrigerant has a very high inside pressure as compared with the refrigeration cycle using a fluorocarbon refrigerant, and particularly a pressure on a high-pressure side happens to exceed the critical point of the refrigerant depending on use conditions such as a temperature.

The critical point is a limit on the high-pressure side (namely, a limit on a high-temperature side) in a state that a gas layer and a liquid layer coexist and a terminal point at one end of a vapor pressure curve. A pressure, a temperature and a density at the critical point become a critical pressure, a critical temperature and a critical density, respectively. Especially, when the pressure exceeds the critical point of the refrigerant in a radiator of the refrigeration cycle, the refrigerant does not condense.

It is general that the refrigeration cycle has the refrigerant and a part of lubricating oil circulated together, and compatibility between the refrigerant and the lubricating oil is considered to be a very significant issue.

There have been proposed various types of lubricating oils corresponding to the fluorocarbon refrigerant as described in, for example, Japanese Patent Laid-open Publications No. HEI 3-14894, No. HEI 3-185093, No. HEI 5-98275, No. HEI 5-59386, No. HEI 5-295384, No. HEI 8-337786 and No. HEI 11-310775. In these years, there are proposed many lubricating oils corresponding to the CO₂ refrigerant as described in, for example, Japanese Patent Laid-Open Publications No. HEI 10-46168, No. HEI 10-46169, No. 2000-169868 and No. 2001-11480.

It is apparent from the above publications that the lubricating oils corresponding to the CO₂ refrigerant have basically many common points with the conventional lubricating oils, and the conventional plant and technology are applied for their production.

Specifically, the conventional lubricating oil can be modified appropriately as the refrigerant is changed, so that it can be used satisfactorily. Even the refrigeration cycle using the CO₂ refrigerant it can use the conventional lubricating oil satisfactorily by selecting the conventional lubricating oil which satisfies the prescribed conditions. In this connection, the required cost can be reduced with certainty in comparison with a case of developing and producing a novel lubricating oil having quite different main ingredients.

Under the circumstances as described above, the present inventor conducted experiments on the operation of a supercritical refrigeration cycle using the CO₂ refrigerant by using a conventional lubricating oil having polyalkyleneglycol as a main ingredient. As a result, it was confirmed that a certain deposit was produced at a portion where the refrigerant is decompressed (specifically, an expansion valve, and a control valve for a compressor where the pressure is reduced somewhat and an orifice nearby). The deposit has an adverse effect on the circulation of the refrigerant and the lubricating oil and therefore it must be remedied for commercialization.

The cause of producing the deposit is presumed that some of additives such as an antioxidant, an oil agent, an extreme pressure agent, an antifoaming agent, an oxygen scavenger and the like contained in the lubricating oil are deeply involved. But, it has not been made substantially clear how the individual additives act particularly in a supercritical state.

Thus, it is a very significant issue for the manufactures of the supercritical refrigeration cycle, to find a lubricating oil involved in the presence or not of such a deposit.

The present invention has been made in view of the above circumstances and provides a supercritical refrigeration cycle which can avoid as much as possible the occurrence of a deposit resulting from a lubricating oil.

### DISCLOSURE OF THE INVENTION

The present invention is a supercritical refrigeration cycle using CO₂ for a refrigerant and having a pressure of exceeding the critical point of the refrigerant on a high-pressure side, wherein the supercritical refrigeration cycle allows the refrigerant and a part of a lubricating oil to circulate, and the lubricating oil used is one not containing "an epoxy-based oxygen scavenger" or "an additive which is thermally decomposed on the high-pressure side and its decomposed components make a chemical reaction to produce a compound having low solubility to the refrigerant" so as to prevent a deposit from being generated at a portion where the refrigerant is decompressed.

By configuring as described above, it is possible to avoid as much as possible the occurrence of a deposit which results from the lubricating oil. A process leading to the present invention will be described below.

Through the experiments on the operation of a supercritical refrigeration cycle using an existing lubricating oil, somedeposit was produced at a portion where the refrigerant was decompressed. Then, chloroform was added to the deposit and an insoluble content was subjected to a pyrolysis GC/MS analysis, and as a result, aromatic compounds such as cresol, benzene, toluene, phenol, benzoic acid and the like, were detected.

Therefore, it is presumed that an aromatic component (a component of aromatic compounds) was produced in the refrigerant because an additive to the lubricating oil was thermally decomposed on the high-pressure side of the supercritical refrigeration cycle. In other words, it seems to be highly possible that the aromatic component, which was a decomposed component of the additive produced on the high-pressure side, was deposited by making some chemical reaction to adhere to the pertinent portion as the refrigerant was decompressed.

Additives contained in the lubricating oil were examined. One of the plural additives was an epoxy-based oxygen scavenger, and it was subjected to the pyrolysis GC/MS analysis thereby to find that the aromatic component was produced. It is presumed that the oxygen scavenger was thermally decomposed in a high-temperature and high-pressure atmosphere in the supercritical refrigeration cycle.

When a similar actuation experiment was conducted using the lubricating oil not containing the epoxy-based oxygen scavenger, a deposit was eliminated substantially completely.

The lubricating oil actually used had a phenolic antioxidant added. The phenolic antioxidant consists of aromatic compounds but satisfies solubility to the refrigerant. According to the experiment, it did not become a cause of producing a deposit.

Specifically, the epoxy-based oxygen scavenger is "an additive which is thermally decomposed on the high-pressure side and its decomposed components make a chemical reaction to produce a compound having low solubility to the refrigerant" and becomes a cause of producing the deposit in the supercritical refrigeration cycle.

Therefore, the present invention is configured to adopt a lubricating oil not containing such an additive to avoid the generation of a deposit so to secure a good circulation of the refrigerant and the lubricating oil.

As a lubricating oil for the supercritical refrigeration cycle using the CO₂ refrigerant, one containing any of polyalkyleneglycol, polyalphaolefin and polyvinyl ther as a main ingredient can be used suitably. Especially, this type of lubricating oil is extensively used for the conventional refrigeration cycle, and it can be produced by applying a conventional plant and technology. Therefore, the adoption of such a lubricating oil is advantageous in terms of the cost.

### BRIEF DESCRIPTION OF THE DRAWINGS

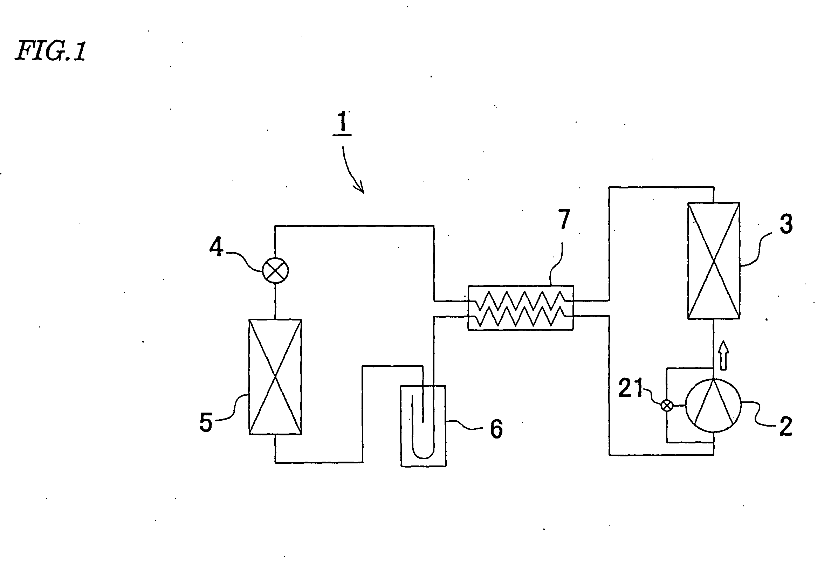

Fig. 1 is a schematic diagram showing the supercritical refrigeration cycle according to a specific embodiment of the present invention.

### BEST MODE FOR CARRYING OUT THE INVENTION

A specific embodiment of the present invention will be described. As shown in Fig. 1, a supercritical refrigeration cycle 1 of this embodiment is a refrigeration cycle for in-car air conditioning mounted on an automobile and provided with a compressor 2 for compressing a refrigerant, a radiator 3 for cooling the refrigerant compressed by the compressor 2, an expansion valve 4 for expanding by decompressing the refrigerant cooled by the radiator 3, an evaporator 5 for evaporating the refrigerant decompressed by the expansion valve 4, an accumulator 6 for separating the refrigerant flowing out of the evaporator 5 into a gas layer and a liquid layer and sending the gas layer refrigerant to the compressor 2, and an inner heat exchanger 7 for heat-exchanging between the refrigerant on a high-pressure side and the refrigerant on a low-pressure side to improve the efficiency of the cycle.

The compressor 2 is provided with a control valve 21 for controlling a discharge amount of the refrigerant. CO₂ is used as the refrigerant, and the pressure on the high-pressure side of the supercritical refrigeration cycle 1 exceeds the critical point of the refrigerant depending on the use conditions such as a temperature. The pressure of the refrigerant is reduced by the expansion valve 4. And a decompression phenomenon to some extent is also caused in the control valve 21.

The outline arrow mark in the drawing indicates a circulation direction of the refrigerant. The lubricating oil for smoothening the operation of the compressor 2 is partly circulated together with the refrigerant.

The lubricating oil of this embodiment has a prescribed additive added to polyalkyleneglycol which is a main ingredient. But, it does not contain "an additive which is thermally decomposed on the high-pressure side and its decomposed components make a chemical reaction to produce a compound having low solubility to the refrigerant" as does the epoxy-based oxygen scavenger.

The oxygen scavenger reacts with an acid substance in the system to suppress total oxidation from progressing. When it is needed, an oxygen scavenger other than the epoxy type and which does not produce a compound with low solubility to the refrigerant is added.

When configured as described above, a deposit is prevented from being produced at a portion where the refrigerant is decompressed. Specifically, with the lubricating oil employed by this embodiment, a deposit did not adhere to the expansion valve 4. And, the deposit did not adhere to the control valve 21 either. Besides, an orifice for returning the lubricating oil to a crank chamber of the compressor 2, which is disposed in the vicinity of the control valve 21, did not have the adhesion of a deposit.

As the lubricating oil, one containing any of polyalkyleneglycol, polyalphaolefin and polyvinylether as the main ingredient can be used in addition to one containing polyalkyleneglycol as the main ingredient. In this case, it does not contain "an additive which is thermally decomposed on the high-pressure side and its decomposed components make a chemical reaction to produce a compound having low solubility to the refrigerant".

As described above, the supercritical refrigeration cycle of this embodiment has achieved an outstanding effect of satisfactorily securing the circulation of the refrigerant and the lubricating oil by specifying the lubricating oil conditions to avoid as much as possible the generation of a deposit. This supercritical refrigeration cycle can be used quite suitably as a refrigeration cycle for in-car air conditioning mounted on automobiles. The configuration of this embodiment can also be applied to other various types of refrigeration cycles such as indoor air conditioners, refrigerators and the like.

### INDUSTRIAL APPLICABILITY

The present invention relates to a supercritical refrigeration cycle using CO₂ as a refrigerant and having a pressure of exceeding the critical point of the refrigerant on the high-pressure side, which can avoid as much as possible the occurrence of a deposit resulting from a lubricating oil, so that it is suitable for a refrigeration cycle which is mounted on, for example, indoor air conditioners and refrigerators, and particularly a vehicle-mounted refrigeration cycle.

## Claims

1. A supercritical refrigeration cycle using CO₂ for a refrigerant and having a pressure of exceeding the critical point of the refrigerant on a high-pressure side, wherein:
the supercritical refrigeration cycle allows the refrigerant and a part of a lubricating oil to circulate, and
the lubricating oil not containing an epoxy-based oxygen scavenger is used to prevent a deposit from being produced at a portion where the refrigerant is decompressed.

2. A supercritical refrigeration cycle using CO₂ for a refrigerant and having a pressure exceeding the critical point of the refrigerant on a high-pressure side, wherein:
the supercritical refrigeration cycle allows the refrigerant and a part of a lubricating oil to circulate, and
the lubricating oil used does not contain an additive which is thermally decomposed on the high-pressure side and its decomposed components make a chemical reaction to produce a compound having low solubility to the refrigerant so as to prevent a deposit from being produced at a portion where the refrigerant is decompressed.

3. The supercritical refrigeration cycle according to claim 1 or 2, wherein the lubricating oil comprises polyalkyleneglycol as a main component.

4. The supercritical refrigeration cycle according to claim 1 or 2, wherein the lubricating oil comprises polyalphaolefin as a main component.

5. The supercritical refrigeration cycle according to claim 1 or 2, wherein the lubricating oil comprises polyvinylether as a main component.

6. The supercritical refrigeration cycle according to claim 1 or 2, wherein the lubricating oil comprises polyolester as a main component.
